# EUROPÄISCHE PATENTSCHRIFT

(11) **EP 4 066 175 B1**
(45) Veröffentlichungstag und Bekanntmachung des Hinweises auf die Patenterteilung: **14.10.2026**
(21) Anmeldenummer: 20815755.2
(22) Anmeldetag: 25.11.2020
(51) Int. Cl.: G06Q 10/20, G06Q 10/0631, G06Q 10/109

(54) **VERFAHREN UND COMPUTERPROGRAMMPRODUKT ZUR WARTUNG VON VERKEHRSFLUGZEUGEN**
METHOD AND COMPUTER PROGRAM PRODUCT FOR THE MAINTENANCE OF COMMERCIAL AIRCRAFT
PROCÉDÉ ET PRODUIT PROGRAMME D'ORDINATEUR POUR LA MAINTENANCE D'AÉRONEFS COMMERCIAUX

(30) Priorität: 26.11.2019 DE 102019132018
(43) Veröffentlichungstag der Anmeldung: 05.10.2022
(73) Patentinhaber: Lufthansa Technik AG, 22335 Hamburg (DE)
(72) Erfinder: KUNZ, Dajana, 55118 Mainz (DE); HERMANN, Valerie, 60487 Frankfurt am Main (DE)
(74) Vertreter: GLAWE DELFS MOLL
(86) Internationale Anmeldenummer: PCT/EP2020/083285
(87) Internationale Veröffentlichungsnummer: WO 2021/105161

(56) Entgegenhaltungen:
- DE-A1- 102012 214 106
- US-A1- 2018 005 197
- US-A1- 2018 082 266
- T. KNOTHE: "Wartungs- und Instandsetzungsarbeiten f?r Luftfahrzeuge dezentral planen und steuern", WERKSTATTSTECHNIK ONLINE JAHRGANG 103 (2013) HEFT 4, 13 April 2013 (2013-04-13), Internet, pages 340 - 343, XP055084000, Retrieved from the Internet <URL:http://www.werkstattstechnik.de/libary/news/2013/04/340_72610.pdf> [retrieved on 20131015]

## Beschreibung

Die Erfindung betrifft ein Verfahren zur Wartung von Verkehrsflugzeugen sowie ein entsprechendes Computerprogrammprodukt.

In einem Flugnetz eingesetzte Verkehrsflugzeuge müssen regelmäßig gewartet werden, um den sicheren Betrieb zu gewährleisten. Dabei müssen neben Wartungsarbeiten, die aufgrund von Herstellervorgaben gemäß festgelegten Wartungsintervallen durchzuführen sind, auch Behebungsmaßnahmen für von dem Bordcomputer der Flugzeuge ausgegebenen Fehlermeldungen durchgeführt werden.

Die entsprechenden Arbeiten müssen am Boden an dafür eingerichteten und mit entsprechendem Personal ausgestatteten Wartungsstationen durchgeführt werden, wobei in der Regel nur an ausgewählten Punkten eines Flugnetzes Wartungsstationen vorgesehen sind, die darüber hinaus jeweils individuelle Ausstattungen aufweisen. In anderen Worten ist nicht jede Wartungsstation für sämtliche ggf. anfallende Reparaturmaßnahmen ausgestattet.

Während einer Wartung ist das Flugzeug zwingend am Boden. Insbesondere im Hinblick auf die Wartungsarbeiten gemäß der festgelegten Wartungsintervalle sind in der Einsatzplanung eines Flugzeuges in einem Flugnetz Bodenzeiten an einem Flughafen mit Wartungsstation vorgesehen, um die entsprechenden planbaren Wartungsarbeiten durchführen zu können. Die Planung, insbesondere die Personalplanung, der Wartungsstationen muss entsprechend an diese Bodenzeiten angepasst werden.

Die für die regelmäßige Wartung vorgesehenen Bodenzeiten, als auch andere Standzeiten eines Flugzeuges, bspw. über Nacht, können mit einem gewissen Puffer geplant sein, um auch unvorhergesehene Fehler am Flugzeug beheben zu können. Entsprechende Fehler werden während des Betriebs eines Flugzeugs durch dessen Bordcomputer erkannt und erfasst.

Im Stand der Technik erfolgt die Planung der Wartungsarbeiten sämtlicher Flugzeuge einer Flotte an den im Flugnetz verfügbaren Wartungsstationen häufig manuell, ggf. lediglich unter zur Zuhilfenahme von Computertools zur grafischen Darstellung der durchzuführenden Arbeiten und der Auslastung der Wartungsstationen, oder zur Detailplanung von aufwendigen Wartungsarbeiten eines einzelnen Flugzeugs, die mehrere Wartungsteams und/oder eine komplexe Schrittabfolge erfordern.

Insbesondere aufgrund von kurzfristigen Änderungen oder Störungen im Flugbetrieb unterliegt die Planung der Wartungsarbeiten ständiger Veränderung. Dabei spielt nicht nur die zeitliche Verschiebung von Bodenzeiten zu wartender Flugzeuge eine Rolle, sondern grundsätzlich auch jegliche Veränderung des Einsatzes eines bestimmten Flugzeuges. Den für die Planung der regelmäßigen Wartungsarbeiten maßgeblichen Wartungsintervallen liegen nämlich regelmäßig die tatsächlichen Flugstunden und/oder die Anzahl der Flugzyklen zugrunde, die sich bei einer unvorhergesehenen Veränderung des Flugplans bzw. des Einsatzes eines Flugzeugs darin derart maßgeblich ändern können, dass eine Wartung zu einem früheren Zeitpunkt als ursprünglich vorgesehen erfolgen muss. Darüber hinaus kann eine Veränderung des Flugplans bzw. des Einsatzes eines Flugzeugs darin zur Folge haben, dass sich ein Flugzeug zu einer für die Wartung vorgesehenen Bodenzeit bei einer anderen Wartungsstation als der ursprünglich vorgesehen Wartungsstation befindet.

Im Stand der Technik können solch kurzfristige Änderungen bei der Wartungsplanung ausschließlich manuell - und in der Regel unter Zeitdruck - berücksichtigt werden. Das Ergebnis der Wartungsplanung ist dabei häufig nicht optimal. Darüber hinaus sind an einigen Wartungsstationen teilweise erhebliche Überkapazitäten bereitzuhalten, um evtl. kurzfristig auftretenden erhöhtem Wartungsbedarf derart gerecht zu werden, dass es möglichst zu keiner Störung des Flugplans aufgrund nicht rechtzeitig abgeschlossener Wartung kommt.

Das Dokument US 2018/008226 A1 betrifft ein Verfahren zum Koordinieren der Routenführung und Planung der Flugzeugwartung für eine Flugzeugflotte über einen gegebenen Zeitraum. In einer ersten Iterationsschleife wird eine Liste fälliger Wartungsarbeiten zusammen mit den für die Wartungsarbeiten notwendigen Bodenzeiten als Randbedingung für die Optimierung des Flugroutings innerhalb des Zeitraums verwendet, um Wartungsmöglichkeiten zu schaffen. In einer zweiten Iterationsschleife wird versucht, innerhalb der geschaffenen Wartungsmöglichkeiten die individuellen Wartungsarbeiten zu planen.

In Dokument US 2018/0005197 A1 wird ein Verfahren zur Planung einer Wartung von Flugzeugen außerhalb eines routinemäßigen Zeitplans für den Austausch bestimmter Teile vorgeschlagen.

Aufgabe der vorliegenden Erfindung ist es, ein gegenüber dem Stand der Technik verbessertes Verfahren zur Wartung von Verkehrsflugzeugen sowie ein entsprechendes Computerprogrammprodukt zu schaffen.

Gelöst wird diese Aufgabe durch ein Verfahren gemäß dem Hauptanspruch sowie ein Computerprogrammprodukt gemäß Anspruch 11. Vorteilhafte Weiterbildungen sind Gegenstand der abhängigen Ansprüche.

Demnach betrifft die Erfindung ein Verfahren zur Durchführung von Wartungsarbeiten an Verkehrsflugzeugen einer in einem Flugnetz eingesetzten Flotte, wobei
- für jedes Flugzeug der Flotte:
   - technische Daten,
   - Informationen zu erforderlichen Wartungsarbeiten auf Basis von Wartungsintervallen und/oder Fehlermeldungen umfassend Endtermine für den Abschluss der einzelnen Wartungsarbeiten, und
   - Informationen zu dem vorgesehenen Routing des Flugzeuges im Flugnetz in einem ersten Zeitraum umfassend die Bodenzeiten des Flugzeugs;
- für die Flotte:
   - ein Flugplan für einen an den ersten Zeitraum anschließenden zweiten Zeitraum umfassend die zu bedienenden Flugrouten des Flugnetzes mit den technischen Anforderungen der einzelnen Flugrouten, wobei für den zweiten Zeitraum noch nicht festgelegt ist, welches Flugzeug jeweils die einzelnen Flugrouten tatsächlich bedienen soll;
- für das Flugnetz:
   - die Wartungsstationen im Flugnetz umfassend deren technische Ausstattung und Kapazität;
verfügbar sind, gekennzeichnet durch die Schritte:
- Ermittlung der erforderlichen Wartungsarbeiten wenigstens eines Flugzeuges umfassend die Endtermine der Wartungsarbeiten;
- wenn der Endtermin wenigstens einer Wartungsarbeit eines Flugzeuges in den ersten Zeitraum fällt:
   - Festlegen einer zur Durchführung der Wartungsarbeit ausreichend ausgestatteten Wartungsstation im Flugnetz zur Durchführung der Wartungsarbeit in einer bestimmten Bodenzeit des Flugzeuges;
- wenn der Endtermin einer Wartungsarbeit eines Flugzeuges in den zweiten Zeitraum fällt:
   - Festlegen wenigstens einer zur Durchführung der Wartungsarbeit(en) an einem Flugzeug erforderlichen Zeitspanne innerhalb des zweiten Zeitraums, und
   - Festlegen des Routings sämtlicher Flugzeuge im Flugnetz unter Berücksichtigung der technischen Daten der Flugzeuge und der technischen Anforderungen der einzelnen Flugrouten, wobei das Routing für das zu wartende Flugzeug eine Bodenzeit entsprechend der wenigstens einen festgelegten Zeitspanne an einer zur Durchführung der Wartungsarbeit ausreichend ausgestatteten Wartungsstation ausweist; und
   - Durchführung der Wartungsarbeiten an einem Flugzeug an der festgelegten Wartungsstation in der vorgesehen Bodenzeit.

Weiterhin betrifft die Erfindung ein Computerprogrammprodukt umfassend Programmteile, welche, wenn geladen in einem Computer zur Durchführung des erfindungsgemäßen Verfahrens ausgelegt sind.

Zunächst werden einige in Zusammenhang mit der Erfindung verwendete Begriff erläutert.

Ein "Endtermin" für den Abschluss der einzelnen Wartungsarbeiten bezeichnet denjenigen Zeitpunkt, an dem eine Wartungsarbeit auf Basis von Wartungsintervallen oder aber aufgrund einer Fehlermeldung spätestens abgeschlossen sein muss. Das Erfordernis ergibt sich dabei entweder aus Hersteller- oder Zulassungsvorgaben, die insbesondere die Flugsicherheit betreffen können, oder aber sonstigen Vorgaben, wie bspw. das Funktionieren von Annehmlichkeiten für die Passagiere, z. B. des Bordunterhaltungssystems. Der "Endtermin" kann dabei als kalendarisches Datum oder aber in Form von Flugstunden oder Flugzyklen angegeben sein. So kann bspw. für festgelegte Wartungsintervalle oder für bestimmte Fehlermeldungen festgelegt sein, innerhalb wie vieler Flugstunden des Flugzeugs die entsprechende Wartungsarbeit durchzuführen ist.

Der Einsatz von Verkehrsflugzeugen in einem Flugnetz erfolgt gemäß einem Flugplan, der dem sog. "Routing" der Flugzeuge zugrunde liegt. Während der Flugplan lediglich festlegt, welche Verbindung zwischen zwei Flughäfen des Flugnetzes zu welcher Zeit ("Flugroute") von einem (grundsätzlich beliebigen, technisch geeigneten) Flugzeug bedient werden soll, wird im Routing eines Flugzeuges festgelegt, welche der Flugrouten gemäß Flugplan eben dieses Flugzeug nacheinander bedienen soll.

Das erfindungsgemäße Verfahren zeichnet sich dadurch aus, dass bei einer anfallenden Wartungsarbeit - unabhängig davon, ob diese aufgrund eines festgelegten Wartungsintervalls oder einer aufgetretenen Fehlermeldung anfällt - anhand von diversen technischen Informationen eine Festlegung der erforderlichen Wartungsarbeit erfolgt, die möglichst keine oder nur geringe negative Auswirkungen auf den Betrieb des Flugnetzes hat.

Zur Durchführung des Verfahrens wird erfindungsgemäß auf diverse technische Größen des Flugnetzes samt Wartungsstationen, der auf dem Flugnetz eingesetzten Flotte an Flugzeugen sowie den einzelnen Flugzeugen zurückgegriffen.

So müssen für die einzelnen Flugzeuge diverse technische Daten vorliegen. Bei den erforderlichen technischen Daten kann es sich um solche handeln, die für die Erstellung eines Flugplans erforderlich sind. Neben der Angabe der Nutzlastmasse oder - bei Verkehrsflugzeugen relevanter - der Passagierkapazität, ggf. unterteilt in einzelne Buchungsklassen, können dazu Daten betreffend die Reichweite, Reisegeschwindigkeit und/oder Start- und Landeanforderungen gehören. Diese technischen Daten können bspw. herangezogen werden, um bei der Erstellung des Flugplans sicherzustellen, dass ein Flugzeug eine bestimmte Flugroute hinsichtlich deren Anforderungen wie Passagieraufkommen, Länge und Start- und Landebedingungen in der gewünschten Flugzeit auch tatsächlich bedienen kann. Für die ggf. durchzuführenden Wartungsarbeiten sind vorzugsweise Daten des Flugzeuges bekannt, welche den Typ des Flugzeugs und die bei dem Flugzeug diversen vorgesehenen Optionen abbilden, wie bspw. Triebwerksoptionen, Innenausstattung, etc.

Die Informationen zu den erforderlichen Wartungsarbeiten können neben den Endterminen für den Abschluss der einzelnen Wartungsarbeiten (die selbst als technische Informationen gelten können) noch weitere technische Informationen umfassen. Insbesondere können sich die technischen Informationen auf die von den Wartungsarbeiten betroffenen Bauteile des Flugzeugs und/oder auf etwaige Anforderungen, welche Flugzeugsysteme für die Wartungsarbeiten ggf. zeitweise stillzulegen sind, beziehen. Diese Informationen können dazu genutzt werden, verschiedene auszuführende Wartungsarbeiten zu koordinieren. Ist beispielsweise für eine erforderliche Wartung das elektrische System des Flugzeugs zeitweise vollständig zu deaktivieren, können zeitgleich keine Wartungsarbeiten durchgeführt werden, die eine dauerhafte Stromversorgung erfordern, wie bspw. das Update von Computersystemen. Umgekehrt kann sich aus den technischen Daten auch ergeben, welche Wartungsarbeiten sich ggf. parallel ausführen lassen.

Für die technischen Anforderungen der einzelnen Flugrouten des Flugnetzes können die bereits angesprochenen Start- und Landeparameter der so verbundenen Flughäfen des Flugnetzes sowie die Distanz zwischen den Flughäfen vorliegen, um sicherstellen zu können, dass ein für eine bestimmte Flugroute vorgesehenes Flugzeug auch tatsächlich auf den dadurch verbundenen Flughäfen starten bzw. landen und die Distanz zwischen den Flughäfen problemlos absolvieren kann. Die fraglichen technischen Informationen können dabei die Länge und/oder die zulässige Flächenpressung pro Fahrwerksrad der Start- und/oder Landebahnen der Flughäfen, sowie ggf. deren Höhe über dem Meeresspiegel umfassen.

Die technischen Daten über die einzelnen Wartungsstationen im Flugnetz beziehen sich in erster Linie auf die technische Ausstattung der Wartungsstationen im Hinblick auf die dort durchführbaren Wartungsarbeiten sowie die wartbaren Flugzeugtypen. Die Wartungsstationen können dabei an im Flugplan unmittelbar berücksichtigten Flughäfen angeordnet sein. Es ist aber auch möglich, dass eine Wartungsstation an einem Flughafen angeordnet ist, der von den Flugrouten des Flugplans nicht unmittelbar erfasst ist, sondern nur zu Wartungszwecken von den Flugzeugen angesteuert wird.

Für die einzelnen Wartungsarbeiten ist - ggf. für jede Wartungsstation gesondert - eine Zeitspanne festgelegt, die für eine bestimmte Wartungsarbeit einzuplanen ist. Diese Zeitspanne ergibt sich grundsätzlich aus den technischen Erfordernissen der Wartungsarbeit und kann insbesondere aus Aufzeichnungen vergangener Wartungen ermittelt werden.

Das Routing der einzelnen Flugzeuge einer Flotte wird in der Regel mit einigen Tagen Vorlauf auf Basis des für diese Tage vorgesehenen Flugplans erstellt, d. h. es wird festgelegt, welches Flugzeug welche Flugrouten des Flugplans bedienen soll. Neben der grundsätzlichen technischen Eignung eines Flugzeuges, eine bestimmte Flugroute tatsächlich bedienen zu können (bspw. hinsichtlich Passagierkapazität und Reichweite) sowie etwaigen Turnaround-Zeiten an den einzelnen Flughäfen können grundsätzlich auch für Wartungsarbeiten erforderliche Bodenzeiten - sofern bekannt - an bestimmten Wartungsstationen im Flugnetz berücksichtigt werden. Ebenso werden selbstverständlich Flugzeuge, die bekanntermaßen über den gesamten Planungszeitraum für das Routing aufwendig gewartet werden müssen, bei der Ermittlung des Routings bis zum Abschluss der Wartungsarbeiten nicht berücksichtigt.

Der Planungszeitraum für das Routing beträgt vorzugsweise weniger als 21 Tage, in der Regel 3 bis 7 Tage. Bei dem Zeitraum, für den das Routing für die einzelnen Flugzeuge einer Flotte bestehen, handelt es sich um den ersten Zeitraum gemäß der Erfindung.

An diesen ersten Zeitraum schließt sich der zweite Zeitraum an, für den zwar bereits der Flugplan - also welche Strecken zu welchen Zeiten bedient werden sollen - existiert, jedoch noch nicht festgelegt ist, welches Flugzeug jeweils die einzelnen Flugrouten tatsächlich bedienen soll.

Basierend darauf liegt der Erfindung die Erkenntnis zugrunde, dass der unterschiedliche Planungsstand betreffend dem Einsatz von Flugzeugen einer Flotte in einem Flugnetz in dem ersten und dem zweiten Zeitraum vorteilhaft für die Durchführung von Wartungsarbeiten bzw. deren Festlegung genutzt werden kann.

Wartungsarbeiten, deren Endtermin in den ersten Zeitraum fällt und die somit innerhalb des bereits erstellten Routings eines Flugzeuges zu erledigen sind, werden in die im Routing vorgegebenen Bodenzeiten des Flugzeugs an für die erforderlichen Wartungsarbeiten technisch geeigneten Wartungsstationen eingeplant. Bei schon aufgrund von vorgegebenen Wartungsintervallen absehbaren Wartungsarbeiten können diese - u. a. durch das vorliegende Verfahren (siehe unten) - unmittelbar im Routing berücksichtigt werden. Für aufgrund von Fehlermeldungen anfallende Wartungsarbeiten erfolgt eine kurzfristige Zuordnung einer Bodenzeit des Flugzeugs zu einer Wartungsstation, die zur Durchführung wenigstens desjenigen Teils der erforderlichen Wartungsarbeiten technisch ausreichend ausgestattet ist, deren Endtermin keine spätere Wartung an einer anderen Wartungsstation erlaubt. Dabei wird auch die Bodenzeit des zu wartenden Flugzeuges, in der die Wartungsarbeiten erfolgen sollen, festgelegt.

Neben der ausreichenden technischen Ausstattung der Wartungsstation kann auch die Auslastung der Wartungsstation zur fraglichen Bodenzeit des Flugzeuges bei der Festlegung der Wartungsstation berücksichtigt werden. Kommen aufgrund des für das Flugzeug festgelegten Routings grundsätzlich mehrere Wartungsstationen in Frage - sind also mehrere Bodenzeiten an unterschiedlichen Flughäfen mit technisch geeigneten Wartungsstationen bis zum Endtermin der erforderlichen Wartungsarbeiten vorgesehen - kann diejenige Wartungsstation gewählt werden, deren Kapazitäten für die fraglichen Wartungsarbeiten ausreichen. Hierzu werden Informationen über die bei einer Wartungsstation geplante Wartungsarbeiten an sämtlichen Flugzeugen umfassend die dafür vorgesehene Bodenzeit gesammelt und bei der Auswahl der Wartungsstation berücksichtigt.

Ist bei keiner der grundsätzlich in Frage kommenden Wartungsstation ausreichend Kapazität für eine kurzfristige Zuordnung eines Flugzeuges aufgrund einer Fehlermeldung innerhalb des dazugehörigen Endtermins frei, ist es bevorzugt, wenn bei den in Frage kommenden Wartungsstationen nicht zwingend erforderliche bzw. aufgrund des jeweiligen Endtermins aufschiebbare Wartungsarbeiten an anderen Flugzeugen (bspw. auf eine spätere Bodenzeit, ggf. auch an einer anderen Wartungsstation) zurückgestellt werden, um so Kapazitäten für die kurzfristig zwingend erforderlichen Wartungsarbeiten eines Flugzeuges zu schaffen.

Insbesondere bei der kurzfristigen Zuordnung eines Flugzeuges zu einer Wartungsstation aufgrund einer Fehlermeldung ist es auch möglich, bei ausreichender Kapazität der Wartungsstation ggf. bereits bekannte, aber noch nicht terminierte Wartungsarbeiten (bspw. weil der Endtermin noch weit in der Zukunft liegt) zusammen mit der aufgrund einer Fehlermeldung durchzuführenden Wartungsarbeiten an der Wartungsstation festzulegen und anschließend entsprechend durchzuführen. Dies ist selbstverständlich immer nur dann möglich, wenn die Wartungsstation auch für diese zusätzlichen Wartungsarbeiten ausreichend technisch ausgestattet ist und über ausreichend Kapazität verfügt. Dabei werden regelmäßig nur solche zusätzlichen Wartungsarbeiten eingeplant, die sich innerhalb der vorgesehen Bodenzeit erledigen lassen. Dadurch wird sichergestellt, dass das Routing des zu wartenden Flugzeuges nicht verändert werden muss. Eine weitere Bodenzeit des Flugzeugs an einer Wartungsstation kann so zumindest in einigen Fällen vermieden werden.

Bei den entsprechend festgelegten zusätzlichen Wartungsarbeiten handelt es sich wiederum regelmäßig um solche, die im Falle einer zwingend erforderlichen kurzfristigen Wartung eines anderen Flugzeuges bei Bedarf aufgeschoben werden können (siehe oben).

Mit der vorstehend beschriebenen Festlegung von Wartungen innerhalb des ersten Zeitraums, also insbesondere kurzfristig erforderliche werdende Wartungsarbeiten aufgrund von Fehlermeldungen, erreicht das erfindungsgemäße Verfahren, dass in der Regel weder das Routing noch der Flugplan für den ersten Zeitraum verändert werden muss. Es hat sich gezeigt, dass dies mithilfe des erfindungsgemäßen Verfahrens wenigstens dann erreicht werden kann, wenn keine kapitalen Schäden an den Flugzeugen auftreten, die bspw. eine augenblickliche Stilllegung eines Flugzeuges erfordern.

Werden Wartungsarbeiten fällig, deren Endtermin in den zweiten Zeitraum fallen, ist bei dem erfindungsgemäßen Verfahren vorgesehen, die dafür erforderlichen Bodenzeiten unmittelbar beim Routing der einzelnen Flugzeuge einer Flotte - also der Zuweisung der Flugzeuge zu bestimmten Flugrouten im Flugplan - zu berücksichtigten. Bei solchen Wartungsarbeiten kann es sich in erster Linie um durch Wartungsintervalle vorgegebene Wartungsarbeiten handeln, für die häufig eine größere Spanne vorgegeben ist, ab wann eine bestimmte Wartungsarbeit frühestens begonnen werden und/oder bis wann sie spätestens abgeschlossen sein soll. Im Rahmen der Erfindung wird eine Wartungsarbeit zum erstgenannten Zeitpunkt "erforderlich", während der letztgenannte Zeitpunkt den Endtermin für eine Wartungsarbeit darstellt. Es ist selbstverständlich auch möglich, dass der Endtermin einer aufgrund einer Fehlermeldung erforderlich gewordenen Wartungsarbeit in den zweiten Zeitraum fällt.

Für die erforderlichen Wartungsarbeiten liegen bevorzugt jeweils Informationen zu deren zu erwartende Dauer, den technischen Anforderungen an eine zur Durchführung der Wartungsarbeiten geeignete Wartungsstation sowie ggf. Informationen, welche anderen Wartungsarbeiten parallel dazu an demselben Flugzeug durchgeführt werden können, vor. Auf Basis dieser Informationen für einzelne Wartungsarbeiten oder aber Gruppen von parallel durchführbaren Wartungsarbeiten können eine oder mehrere Zeitspannen ermittelt werden, welche die erforderlichen Bodenzeiten zur Durchführung einer oder mehrerer Wartungsarbeiten sowie der technischen Anforderungen an eine zur Durchführung der Wartungsarbeit(en) geeignete Wartungsstation umfasst.

Die so vorzugsweise für sämtliche Flugzeuge einer Flotte festgelegten Zeitspannen werden bei Routings sämtlicher Flugzeuge im Flugnetz berücksichtigt. Neben der aus dem Stand der Technik bekannten Berücksichtigung der technischen Daten der Flugzeuge und der technischen Anforderungen der einzelnen Flugrouten werden für die einzelnen Flugzeuge dazu Bodenzeiten an Wartungsstation entsprechend den zuvor ermittelten Zeitspannen vorgesehen, d. h. die Bodenzeiten sind größer gleich der ermittelten Zeitspannung und darüber hinaus noch an Wartungsstationen vorgesehen, deren technische Ausstattung für die in einer Zeitspanne durchzuführenden Wartungsarbeiten ausreichend ist. In der Folge ist sichergestellt, dass sämtliche in der Phase, für die das Routing der einzelnen Flugzeuge erstellt wird, anfallenden Wartungsarbeiten ordnungsgemäß zu vorgesehenen Bodenzeiten und an jeweils geeigneten Wartungsstationen durchgeführt werden können. Das so erstellte Routing wird mit fortschreitender Zeit, sobald der zweite Zeitraum erreicht wird, das Routing der Flugzeuge im Flugzeugnetz im ersten Zeitraum (siehe oben).

Bei der Erstellung des Routings und insbesondere dem Vorsehen der für die Wartungsarbeiten erforderlichen Bodenzeiten erfolgt neben dem Abgleich der technischen Voraussetzungen auch eine Optimierung hinsichtlich der Auslastung der einzelnen Wartungsstationen im Flugnetz. Dabei wird nicht nur beachtet, dass an keiner der Wartungsstationen mehr Wartungsarbeiten parallel durchzuführen sind als die Kapazität der Wartungsstation erlaubt, wobei sich Kapazität in diesem Zusammenhang nicht nur auf die technische Ausstattung der Wartungsstation, sondern auch auf die Verfügbarkeit von Wartungspersonal an dieser Station bezieht. Durch eine Vergleichmäßigung der Auslastung wird sichergestellt, dass das Wartungspersonal gleichmäßig ausgelastet wird. Gleichzeitig wird sichergestellt, dass in der Regel an jeder der Wartungsstationen Kapazitäten zur Durchführung aufgrund von Fehlermeldungen kurzfristig erforderlichen Wartungsarbeiten an nicht für die Wartung eingeplanten Flugzeugen zur Verfügung steht (siehe oben).

Die Erstellung des Routings für den zweiten Zeitraum kann bevorzugt zunächst auf das Routing aus dem ersten Zeitraum aufbauen. Dazu wird vorzugsweise überprüft, ob bei Fortschreibung des Flugplans aus dem ersten Zeitraum eine Durchführung der Wartungsarbeit an einer ausreichend ausgestatteten Wartungsstation zu einer geplanten Bodenzeit möglich ist, und, wenn ja, das Routing sämtlicher Flugzeuge im Flugnetz für den zweiten Zeitraum bis zum Endtermin der Wartungsarbeit aus dem ersten Zeitraum fortgeschrieben wird. Ist das Fortschreiben des Flugplans aus dem ersten Zeitraum grundsätzlich möglich, kann die ansonsten erforderliche Rechenleistung zur Erstellung eines alternativen Routings entfallen.

Alternativ oder zusätzlich ist es auch möglich, dass einzelne Flugrouten zu einem "Umlauf" zusammengefasst sind, bei dem aneinander anschließende die Flugrouten von einem Flugzeug nacheinander abgeflogen werden. Die Umläufe können am selben Flughafen oder aber an zwei verschiedenen Flughäfen beginnen und enden. Durch Vorgabe von Umläufen anstelle der darin zusammengefassten Flugrouten kann die Rechenleistung zur Erstellung eines Routings sämtlicher Flugzeuge im Flugnetz für den zweiten Zeitraum regelmäßig reduziert werden.

Unabhängig ob im Rahmen des ersten oder zweiten Zeitraums festgelegt, werden die geplanten Wartungsarbeiten in der dafür vorgesehenen Bodenzeit an der dafür vorgesehenen Wartungsstation gemäß dem Stand der Technik durchgeführt werden.

Wie dargelegt fußt das erfindungsgemäße Verfahren bei Festlegung von Bodenzeiten eines Flugzeuges an bestimmten Wartungsstationen sowohl für den ersten, als auch für den zweiten Zeitraum auch einer Vielzahl technischer Parameter, die zu berücksichtigen sind. Als Ergebnis werden nicht nur die anfallenden Wartungsarbeiten vor Erreichen der jeweils vorgesehenen Endtermine durchgeführt, sondern gleichzeitig wird der Flugplan, bei dem die verschiedenen Flugrouten ineinandergreifen, nicht oder zumindest nur kaum gestört. Die dazu durchzuführenden Schritte und Abgleiche sind aufgrund der hohen Komplexität manuell nicht mehr oder zumindest nicht in akzeptabler Zeit zu bewältigen.

Neben den erforderlichen Wartungsarbeiten auf Basis von Wartungsintervallen oder Fehlermeldungen können bei dem erfindungsgemäßen Verfahren auch Wartungsarbeiten berücksichtigt werden, die sich während der Durchführung anderer Wartungsarbeiten ergeben bzw. deren Erfordernis dabei entdeckt wird (sog. "Findings"). Auch ist es möglich, aufgrund von Predictive Maintenance als erforderlich erachtete Wartungsarbeiten im erfindungsgemäßen Verfahren zu berücksichtigen.

Zur Erläuterung des erfindungsgemäßen Computerprogrammproduktes wird auf die vorstehenden Ausführungen verwiesen. Es ist dabei selbstverständlich, dass die letztendliche Durchführung der Wartungsarbeiten in der Regel nicht durch das Computerprogrammprodukt selbst durchgeführt werden kann, sondern sich die durch das Computerprogrammproduktes abbildbare Verfahrensschritte lediglich bis zur letztendlichen Durchführung der Wartungsarbeiten erstrecken.

Die Erfindung wird nun unter Bezugnahme auf die beigefügten Zeichnungen beispielhaft beschrieben. Es zeigen:

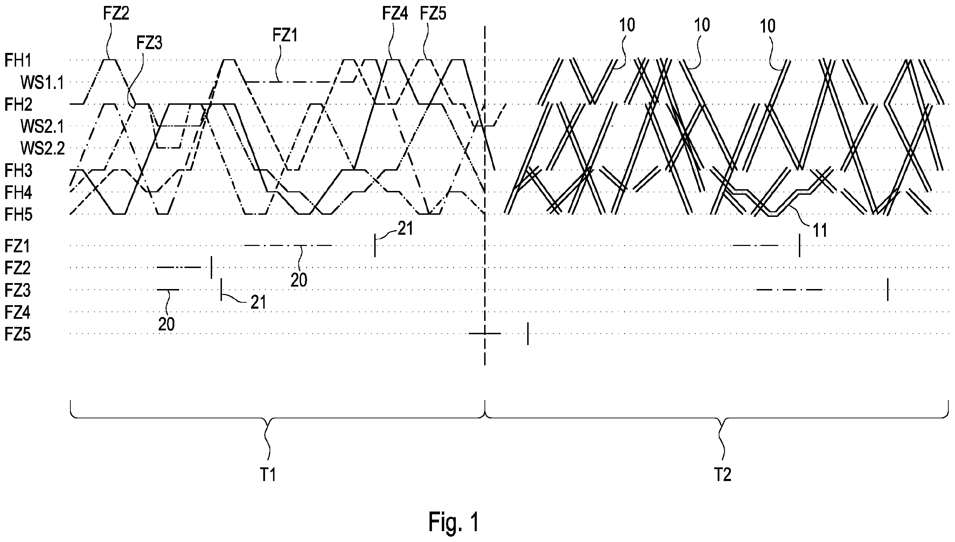

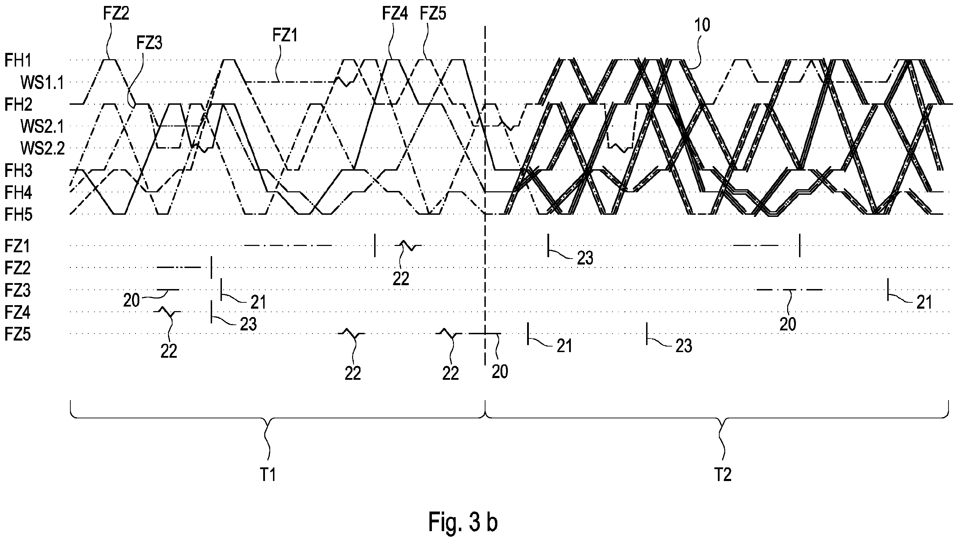

- Figuren 1-3a,b:: schematische Darstellungen zum erfindungsgemäßen Verfahren.

Als Ausgangspunkt für die weiteren Erläuterungen des erfindungsgemäßen Verfahren ist in Figur 1 im oberen Bereich für fünf Flugzeuge FZ1, FZ2, FZ3, FZ4, FZ5 einer Flotte das jeweilige Routing in einem Flugnetz umfassend fünf Flughäfen FH1, FH2, FH3, FH4, FH5, von denen zwei Flughäfen FH1, FH2 Wartungsstationen WS1.1, WS2.1, WS2.2 aufweisen, innerhalb eines ersten Zeitraums T1 im Zeitverlauf von links nach rechts dargestellt. Die möglichen Aufenthaltspositionen eines Flugzeuges FZ1, FZ2, FZ3, FZ4, FZ5 an einem Flughafen FH1, FH2, FH3, FH4, FH5 oder an einer Wartungsstationen WS1.1, WS2.1, WS2.2 sind jeweils durch eine horizontale gepunktete Linie dargestellt. Durch die einzelnen Linien für die Flugzeuge FZ1, FZ2, FZ3, FZ4, FZ5 ist angegeben, wann sich welches Flugzeug FZ1, FZ2, FZ3, FZ4, FZ5 entweder auf einer Aufenthaltsposition FH1, FH2, FH3, FH4, FH5, WS1.1, WS2.1, WS2.2 befindet (vgl. horizontale Abschnitte), oder wenn es sich auf dem Weg zwischen Aufenthaltsposition FH1, FH2, FH3, FH4, FH5, WS1.1, WS2.1, WS2.2 befindet (vgl. diagonale Abschnitte), sei es auf einem Flug zwischen zwei Flughäfen FH1, FH2, FH3, FH4, FH5 oder dem Rollen zu oder von einer Wartungsstation WS1.1, WS2.1, WS2.2. Aus Figur 1 lassen sich also unmittelbar die Bodenzeiten der einzelnen Flugzeuge FH1, FH2, FH3, FH4, FH5 an den einzelnen Flughäfen FH1, FH2, FH3, FH4, FH5 ablesen.

Im unteren Bereich der Figur 1 sind für jedes der fünf Flugzeuge FZ1, FZ2, FZ3, FZ4, FZ5 der Flotte die Informationen über erforderliche Wartungen 20 gemäß vorgegebenen Wartungsintervallen über die Zeit dargestellt, wobei sich jede der Wartungen 20 bei Bedarf bis zum jeweils angedeuteten Endtermine 21 zeitlich nach hinten verschieben lässt.

Das Routing der Flugzeuge FZ1, FZ2, FZ3, FZ4, FZ5 ist im ersten Zeitraum T1 so gewählt, dass sämtliche Flugrouten eines Flugplans (aus Übersichtsgründen im ersten Zeitraum T1 nicht dargestellt) bedient werden.

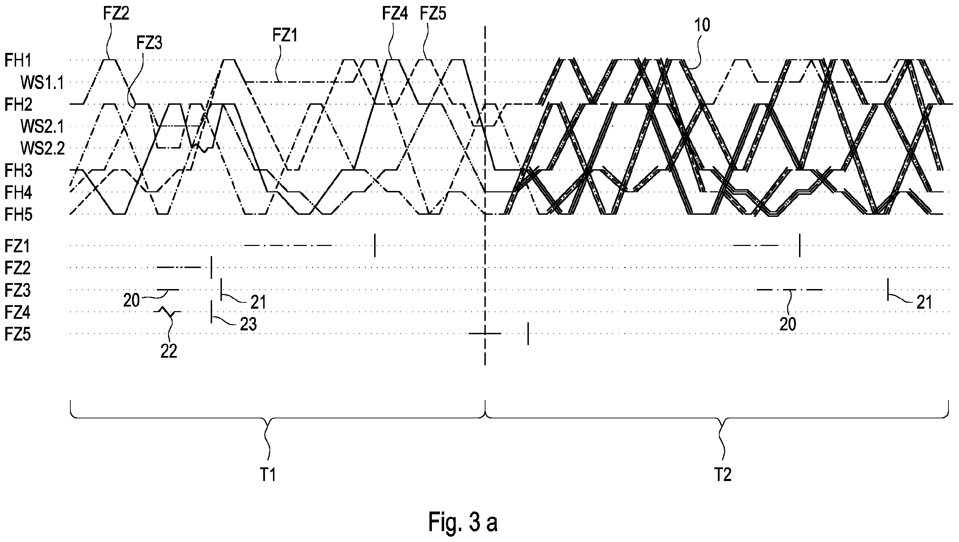

Wie später noch anhand der Figuren 3a und b näher erläutert wird, ist gleichzeitig das Routing durch das erfindungsgemäße Verfahren so geplant, dass die im ersten Zeitraum T1 zu wartenden Flugzeuge FZ1, FZ2, FZ3 in den vorgesehenen Wartungszeiträumen, insbesondere aber vor dem jeweiligen Endtermin 21 für eine Wartung 20, sich an einer für die Durchführung der Wartung ausreichend ausgestatteten Wartungsstation WS1.1, WS2.1, WS2.2 befinden. Ob eine Wartungsstation für eine Wartung 10 ausreichend ausgestattet ist, kann anhand geeigneter Informationen über die einzelnen Wartungsstationen WS1.1, WS2.1, WS2.2 hinsichtlich Ausstattung und Kapazität ermittelt werden.

Der Aufenthalt des Flugzeugs FZ1 an der Wartungsstation WS1.1 ist im dargestellten Ausführungsbeispiel länger eingeplant als für die eigentlich vorgesehene Wartung 20 notwendig, um Puffer für während der Durchführung der Wartung an der Wartungsstation WS1.1 evtl. auftretende Probleme unmittelbar lösen zu können.

Für den zweiten Zeitraum T2 ist lediglich der Flugplan mit den zu bedienenden Flugrouten 10 (vgl. Parallellinien) vorhanden, ohne dass bereits festgelegt wäre, welches der Flugzeuge FZ1, FZ2, FZ3, FZ4, FZ5 die jeweiligen Flugrouten 10 bedient. Ein Teil der Flugrouten 10 ist zu einem Umlauf 11 zusammengefasst, womit für die Flugrouten 10 des Umlaufs 11 festgelegt ist, dass diese nacheinander von ein und demselben Flugzeug FZ1, FZ2, FZ3, FZ4, FZ5 bedient werden. Der zweite Zeitraum T2 wird dabei nach entsprechendem Fortschreiten der Zeit nach Abschluss des ersten Zeitraums T1 zu dem neuen ersten Zeitraum T1.

Für sämtliche Flugrouten 10 liegen diverse technische Anforderungen vor, die von einem Flugzeug FZ1, FZ2, FZ3, FZ4, FZ5, welches die Flugroute 10 bedienen soll, erfüllt werden müssen. Zu den technischen Anforderungen zählen bspw. die erforderliche Reichweite sowie die Sitzplatzanzahl. Gleichzeitig liegen für jedes Flugzeug FZ1, FZ2, FZ3, FZ4, FZ5 geeignete Informationen, wie eben Reichweite und Anzahl der Sitzplätze vor, über die festgestellt werden kann, ob ein Flugzeug FZ1, FZ2, FZ3, FZ4, FZ5 eine bestimmte Flugroute 10 auch tatsächlich bedienen kann.

Das erfindungsgemäße Verfahren wird ausgehend von Figur 1 anhand der Figuren 2 sowie 3a und b erläutert.

In einem ersten Schritt werden sämtliche erforderlichen Wartungsarbeiten 20 für sämtliche Flugzeuge FZ1, FZ2, FZ3, FZ4, FZ5 zumindest für den ersten Zeitraum T1 ermittelt. Im gleichen Zuge können grundsätzlich auch die erforderlichen Wartungsarbeiten 20 für den zweiten Zeitraum T2 ermittelt werden, wobei auf diese Informationen regelmäßig erst dann zurückgegriffen werden muss, wenn das Routing für den zweiten Zeitraum T2 erstellt wird, was später anhand der Figuren 3a und b erläutert wird. Es ist daher auch möglich, dass die erforderlichen Wartungsarbeiten 20 für den zweiten Zeitraum T2 auch erst dann ermittelt werden, wenn das Routing für diesen Zeitraum T2 erstellt wird oder bereits erstellt ist.

Ergibt sich aus den ermittelten erforderlichen Wartungsarbeiten 20 für den ersten Zeitraum T1 kein Unterschied zu den in diesem Zeitraum T1 bereits eingeplanten Wartungsarbeiten 20, kann das für den ersten Zeitraum T1 erstellte Routing gemäß Figur 1 unverändert bleiben.

Es ist jedoch möglich, dass bei einem Flugzeug FZ1, FZ2, FZ3, FZ4, FZ5 während des Betriebs innerhalb des ersten Zeitraum T1 eine Fehlermeldung an einem Bordcomputer eines der Flugzeuge FZ1, FZ2, FZ3, FZ4, FZ5 auftritt, die einer kurzfristigen Wartung bedarf.

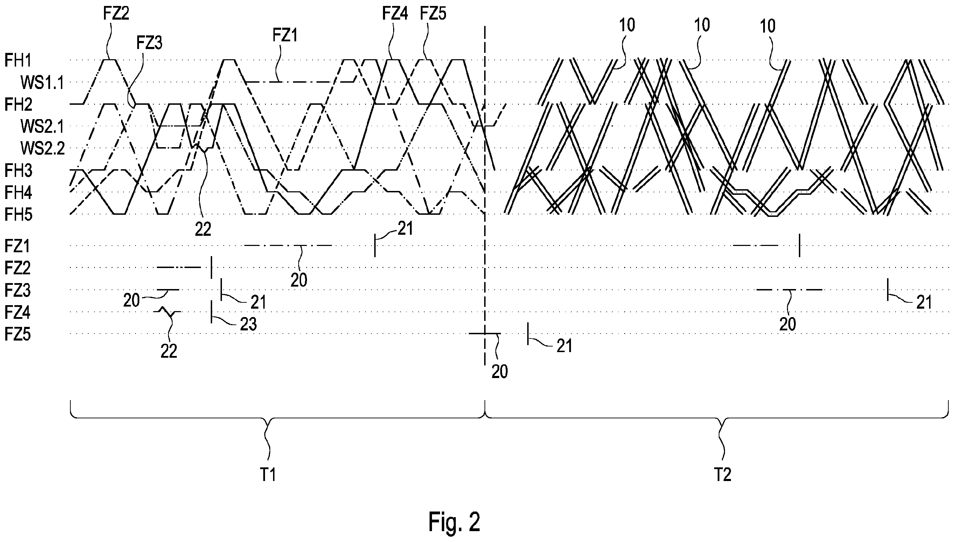

In Figur 2 ist für das Flugzeug FZ4 eine solche, aufgrund einer Fehlermeldung kurzfristig erforderliche Wartungsarbeit 22 umfassend deren Endtermin 23, bis wann die Wartung abgeschlossen sein muss, dargestellt. Durch die Zick-Zack-Linie ist verdeutlicht, dass es sich bei der Wartungsarbeit 22 nicht um eine planbare, durch Wartungsintervalle vorgegebene Wartungsarbeit 20 handelt.

Da der Endtermin 23 dieser kurzfristig erforderlich gewordenen Wartungsarbeit 22 innerhalb des ersten Zeitraums T1 liegt, wird nach einer geeigneten Bodenzeit des betroffenen Flugzeuges FZ4 gesucht, zu der das Flugzeug FZ4 an einer für die erforderliche Wartungsarbeit 22 ausreichend ausgestattete Wartungsstation entlang des bestehenden Routings des Flugzeugs FZ4 - in diesem Fall Wartungsstation W2.2 - verfügbar ist. Die Durchführung der Wartungsarbeit 22 wird dann entsprechend in das Routing des Flugzeugs FZ4 festgelegt, wie in Figur 2 gezeigt ist.

Bei der Ermittlung der erforderlichen Wartungsarbeiten 20 für sämtliche Flugzeuge FZ1, FZ2, FZ3, FZ4, FZ5 werden - spätestens bevor das Routing für den zweiten Zeitraum T2 festgelegt wird - auch solche Wartungsarbeiten 20 ermittelt, deren Endtermine 21 im zweiten Zeitraum T2 liegen.

Für die Wartungsarbeiten 20 mit Endtermin 21 im zweiten Zeitraum T2 werden erforderliche Zeitspannen innerhalb des zweiten Zeitraums T2 festgelegt, für die Bodenzeiten der betroffenen Flugzeuge FZ1, FZ2, FZ3, FZ4, FZ5 an für die erforderlichen Wartungsarbeiten 20 ausreichend ausgestatteten Wartungsstationen WS1.1, WS2.1, WS2.2 vorzusehen sind. Bei den in Figur 2 dargestellten Wartungsarbeiten 20 mit Endtermin 21 im zweiten Zeitraum T2 entsprechend die Zeitspannen den jeweiligen Wartungsarbeiten 20. Wie später in Zusammenhang mit Figur 3b noch näher erläutert, ist es aber auch möglich mehrere Wartungsarbeiten 20 in einer gemeinsamen Zeitspanne einzuplanen. Liegen Angaben vor, welche Wartungsarbeiten 20 sich bei Bedarf parallel ausführen lassen, können entsprechende Wartungsarbeiten 20 bspw. in derselben Zeitspanne parallel eingeplant werden. Es ist auch möglich, dass Wartungsarbeiten 20, deren Vor- und Nacharbeiteten - bspw. der Demontage und Montage einzelner Komponenten - identisch oder ähnliche sind, gemeinsam eingeplant werden, um so Synergieeffekte zu heben.

Sind die entsprechenden Zeitspannen festgelegt, wird anschließen das Routing sämtlicher Flugzeuge FZ1, FZ2, FZ3, FZ4, FZ5 im Flugnetz für den zweiten Zeitraum festgelegt, sodass einerseits sämtliche Flugrouten 10 bedient werden, andererseits die Flugzeuge FZ1, FZ2, FZ3, FZ4, FZ5 für die zuvor ermittelten, zur Durchführung der Wartungsarbeiten 20 erforderlichen Zeitspannen an Wartungsstationen WS1.1, WS2.1, WS2.2 eingeplant sind.

Bei der Ermittlung des Routings werden die technischen Daten der Flugzeuge FZ1, FZ2, FZ3, FZ4, FZ5 derart mit den technischen Anforderungen der einzelnen Flugrouten 10 abgeglichen, dass sichergestellt ist, dass ein für eine Flugroute 10 vorgesehenes Flugzeug FZ1, FZ2, FZ3, FZ4, FZ5 technisch - bspw. im Hinblick auf Passagierkapazität und Reichweite - in der Lage ist, die Flugroute 10 auch tatsächlich zu bedienen.

Bei der Einplanung der für die Wartungsarbeiten 20 vorgesehenen Zeitspannen wird anhand von Informationen zu den Wartungsarbeiten 20 sowie zur technischen Ausstattung der einzelnen Wartungsstationen WS1.1, WS2.1, WS2.2 sichergestellt, dass die innerhalb einer Zeitspanne durchzuführenden Wartungsarbeiten 20 auch an der dafür vorgesehenen Wartungsstation WS1.1, WS2.1, WS2.2 tatsächlich durchgeführt werden kann.

In Figur 3a ist ein auf Basis der Wartungsarbeiten 20 mit Endtermin im zweiten Zeitraum 21 und der zu bedienenden Flugrouten 10 im zweiten Zeitraum festgelegtes Routing der Flugzeuge FZ1, FZ2, FZ3, FZ4, FZ5 gezeigt, bei dem ausreichende Bodenzeiten für sämtliche erforderliche Wartungsarbeiten 20 an dafür ausgestatteten Wartungsstationen WS1.1, WS2.1, WS2.2 vorgesehen sind.

Dabei ergibt sich im beispielhaft dargestellten Routing gemäß Figur 3a die Besonderheit, dass die für das Flugzeug FZ1 erforderliche Wartung 20 ausschließlich an der Wartungsstation WS1.1 durchgeführt werden kann. Da aufgrund der übrigen Randbedingung bei der Festlegung des Routings im Routing des Flugzeuges FZ1 keine ausreichende Bodenzeit am Flughafen FZ1 ergibt, ist vor der eigentlichen Wartung 20 an der Wartungsstation WS1.1 ein Überführungsflug vom Flughafen FZ2 zum Flughafen FZ1 erforderlich. Da der Flug keine zu bedienende Flugroute 10 darstellt, kann er als Leerflug durchgeführt werden oder er wird als zusätzlicher Sonderflug angeboten.

Figur 3b ist grundsätzlich mit Figur 3a vergleichbar. Allerdings sind in Figur 3b noch zusätzlich Wartungsarbeiten 22 aufgrund von Fehlermeldungen der Bordcomputer der Flugzeuge FZ1 und FZ5 zu berücksichtigen.

Auch wenn der Endtermin 23 der für das Flugzeug FZ1 erforderlich gewordenen Wartung 22 im zweiten Zeitraum T2 liegt, kann die Wartung 22 im ersten Zeitraum T1 zusammen mit der dort bereits festgelegten Wartung an der Wartungsstation WS1.1 mit durchgeführt werden. Aufgrund der Informationen über die durchzuführenden Wartungen 20, 22 sowie zur technischen Ausstattung der Wartungsstation WS1.1 kann die Durchführung der Wartung 22 zusammen mit der Wartung 20 festgelegt werden, ohne dass die für das Flugzeug FZ1 zuvor für die Durchführung der Wartungsarbeit 20 genutzten Bodenzeit überschritten würde.

Vergleichbar wird eine der für das Flugzeug FZ5 erforderlich gewordenen Wartungen 22 zusammen mit einer bereits für den ersten Zeitraum T1 eingeplanten, jedoch in den zweiten Zeitraum T2 hineinragenden Bodenzeit an der Wartungsstation WS2.1 festgelegt.

Da diese Bodenzeit nicht auch zur Durchführung der zweiten der für das Flugzeug FZ5 erforderlich gewordenen Wartungen 22 ausreicht, wird für das Flugzeug FZ5 ein zusätzlicher Besuch an der Wartungsstation WS2.2 festgelegt. Da das Flugzeug FZ5 im Routing, wie es ohne zusätzlich erforderlich gewordene Wartungen 22 erstellt würde (vgl. Figur 3a), über keine ausreichende Bodenzeit zur Durchführung der fraglichen Wartung 22 verfügt, wird ein davon abweichendes Routing für den zweiten Zeitraum T2 festgelegt, in dem ausreichende Bodenzeiten an einem Flughafen FH1, FH2, FH3, FH4, FH5 mit einer ausreichend ausgestatteten Wartungsstation WS1.1, WS2.1, WS2.2 vorgesehen sind. Gegenüber dem Routing aus Figur 3a sind in dem Routing gemäß Figur 3b einige Flugrouten der Flugzeuge FZ1 und FZ5 "vertauscht". Auch bei diesem Routing werden selbstverständlich die technischen Anforderungen der einzelnen Flugstrecken 10 sowie die technischen Eigenschaften der Flugzeuge FZ1, FZ2, FZ3, FZ4, FZ5 berücksichtigt.

An den Wartungsstationen WS1.1, WS2.1, WS2.2 werden die mit dem erfindungsgemäßen Verfahren festgelegten Wartungen 20, 22 zu den dafür vorgesehenen Zeiten durchgeführt.

## Patentansprüche

1. Verfahren zur Durchführung von Wartungsarbeiten (20, 22) an Verkehrsflugzeugen (FZ1, FZ2, FZ3, FZ4, FZ5) einer in einem Flugnetz eingesetzten Flotte, wobei
- für jedes Flugzeug (FZ1, FZ2, FZ3, FZ4, FZ5) der Flotte:
- technische Daten,
- Informationen zu erforderlichen Wartungsarbeiten (20, 22) auf Basis von Wartungsintervallen und/oder Fehlermeldungen umfassend Endtermine (21, 23) für den Abschluss der einzelnen Wartungsarbeiten (20, 22), und
- Informationen zu dem vorgesehenen Routing des Flugzeuges (FZ1, FZ2, FZ3, FZ4, FZ5) im Flugnetz in einem ersten Zeitraum (T1) umfassend die Bodenzeiten des Flugzeugs (FZ1, FZ2, FZ3, FZ4, FZ5);
- für die Flotte:
- ein Flugplan für einen an den ersten Zeitraum (T1) anschließenden zweiten Zeitraum (T2) umfassend die zu bedienenden Flugrouten (10) des Flugnetzes mit den technischen Anforderungen der einzelnen Flugrouten, wobei für den zweiten Zeitraum (T2) noch nicht festgelegt ist, welches Flugzeug (FZ1, FZ2, FZ3, FZ4, FZ5) jeweils die einzelnen Flugrouten (10) tatsächlich bedienen soll;
- für das Flugnetz:
- die Wartungsstationen (WS1.1, WS2.1, WS2.2) im Flugnetz umfassend deren technische Ausstattung und Kapazität;
verfügbar sind, mit folgenden Schritten :
- Ermittlung der erforderlichen Wartungsarbeiten (20, 22) wenigstens eines Flugzeuges (FZ1, FZ2, FZ3, FZ4, FZ5) umfassend die Endtermine (21, 23) der Wartungsarbeiten (20, 22);
- wenn der Endtermin (21, 23) wenigstens einer Wartungsarbeit (20, 22) eines Flugzeuges (FZ1, FZ2, FZ3, FZ4, FZ5) in den ersten Zeitraum fällt:
- Festlegen einer zur Durchführung der Wartungsarbeit (20, 22) ausreichend ausgestatteten Wartungsstation (WS1.1, WS2.1, WS2.2) im Flugnetz zur Durchführung der Wartungsarbeit (20, 22) in einer bestimmten Bodenzeit des Flugzeuges (FZ1, FZ2, FZ3, FZ4, FZ5);
- wenn der Endtermin (21, 23) einer Wartungsarbeit (20, 22) eines Flugzeuges (FZ1, FZ2, FZ3, FZ4, FZ5) in den zweiten Zeitraum (T2) fällt:
- Festlegen wenigstens einer zur Durchführung der Wartungsarbeit(en) (20, 22) an einem Flugzeug (FZ1, FZ2, FZ3, FZ4, FZ5) erforderlichen Zeitspanne innerhalb des zweiten Zeitraums (T2), und
- Festlegen des Routings sämtlicher Flugzeuge (FZ1, FZ2, FZ3, FZ4, FZ5) im Flugnetz unter Berücksichtigung der technischen Daten der Flugzeuge (FZ1, FZ2, FZ3, FZ4, FZ5) und der technischen Anforderungen der einzelnen Flugrouten (10), wobei das Routing für das zu wartende Flugzeug (FZ1, FZ2, FZ3, FZ4, FZ5) eine Bodenzeit entsprechend der wenigstens einen festgelegten Zeitspanne an einer zur Durchführung der Wartungsarbeit (20, 22) ausreichend ausgestatteten Wartungsstation (WS1.1, WS2.1, WS2.2) ausweist; und
- Durchführung der Wartungsarbeiten (20, 22) an einem Flugzeug (FZ1, FZ2, FZ3, FZ4, FZ5) an der festgelegten Wartungsstation (WS1.1, WS2.1, WS2.2) in der vorgesehenen Bodenzeit.

2. Verfahren nach Anspruch 1, wobei, wenn der Endtermin (21, 23) einer Wartungsarbeit (20, 22) eines Flugzeuges (FZ1, FZ2, FZ3, FZ4, FZ5) in den zweiten Zeitraum (T2) fällt, überprüft wird, ob bei Fortschreibung des Flugplans aus dem ersten Zeitraum (T1) eine Durchführung der Wartungsarbeit (20, 22) an einer ausreichend ausgestatteten Wartungsstation (WS1.1, WS2.1, WS2.2) zu einer geplanten Bodenzeit möglich ist, und, wenn ja, das Routing sämtlicher Flugzeuge (FZ1, FZ2, FZ3, FZ4, FZ5) im Flugnetz für den zweiten Zeitraum (T2) bis zum Endtermin (23, 21) der Wartungsarbeit (20, 22) aus dem ersten Zeitraum (T1) fortgeschrieben wird, sodass eine ansonsten erforderliche Rechenleistung zur Erstellung eines alternativen Routings entfällt.

3. Verfahren nach einem der vorhergehenden Ansprüche, wobei die Informationen zu erforderlichen Wartungsarbeiten (20, 22) Angaben umfassen, welche Wartungsarbeiten (20, 22) sich technisch parallel ausführen lassen.

4. Verfahren nach einem der vorhergehenden Ansprüche, wobei das Festlegen einer zur Durchführung der Wartungsarbeit (20, 22) ausreichend ausgestatteten Wartungsstation (WS1.1, WS2.1, WS2.2) im ersten Zeitraum (T1) diejenige Wartungsstation gewählt wird, deren Kapazitäten für die fraglichen Wartungsarbeiten (20, 22) ausreichen.

5. Verfahren nach einem der vorhergehenden Ansprüche, wobei bei keiner ausreichenden Kapazität einer Wartungsstation (WS1.1, WS2.1, WS2.2) innerhalb des ersten Zeitraums (T1) zum Festlegen der Durchführung einer Wartungsarbeit (20, 22) an einem Flugzeug (FZ1, FZ2, FZ3, FZ4, FZ5) eine aufschiebbare Wartungsarbeit (20, 22) an einem anderen Flugzeug (FZ1, FZ2, FZ3, FZ4, FZ5) an der Wartungsstation (WS1.1, WS2.1, WS2.2) zurückgestellt wird, um Kapazitäten für die kurzfristig zwingend erforderlichen Wartungsarbeiten (20, 22) des einen Flugzeugs (FZ1, FZ2, FZ3, FZ4, FZ5) zu schaffen.

6. Verfahren nach einem der vorhergehenden Ansprüche, wobei bei Festlegung der Durchführung von Wartungsarbeiten (20, 22) im ersten Zeitraum (T1) die Durchführung wenigstens einer Wartungsarbeit (20, 22), deren Endtermin (21, 23) im zweiten Zeitraum (T2) liegt, mit festgelegt wird.

7. Verfahren nach einem der vorhergehenden Ansprüche, wobei die technischen Daten eines Flugzeugs (FZ1, FZ2, FZ3, FZ4, FZ5) Angaben des Flugzeugtyps, der Triebwerksoptionen, der Nutzlastmasse und/oder der Passagierkapazität, vorzugsweise unterteilt in einzelne Buchungsklassen, die Reichweite, die Reisegeschwindigkeit und/oder Start- und Landeanforderungen umfassen.

8. Verfahren nach einem der vorhergehenden Ansprüche, wobei für die erforderlichen Wartungsarbeiten (20, 22) Informationen zu den von den Wartungsarbeiten betroffenen Bauteilen des Flugzeugs (FZ1, FZ2, FZ3, FZ4, FZ5) und/oder Anforderungen, welche Flugzeugsysteme für die Wartungsarbeiten (20, 22) zeitweise stillzulegen sind, verfügbar sind.

9. Verfahren nach einem der vorhergehenden Ansprüche, wobei die technischen Anforderungen der einzelnen Flugrouten (10) Start- und Landeparameter der verbundenen Flughäfen und/oder die Distanz zwischen den Flughäfen umfassen, wobei die Start- und Landeparameter vorzugsweise die Länge und/oder die zulässige Flächenpressung pro Fahrwerksrad der Start- und/oder Landebahnen umfassen.

10. Verfahren nach einem der vorhergehenden Ansprüche, wobei der erste Zeitraum (T1)bis zu 21 Tage, vorzugsweise 3 bis 7 Tage beträgt.

11. Computerprogrammprodukt umfassend Programmteile, welche, wenn geladen in einem Computer zur Durchführung des Verfahrens nach einem der vorhergehenden Ansprüche ausgelegt sind.

## Claims

1. Method for carrying out items of maintenance work (20, 22) on commercial aircraft (FZ1, FZ2, FZ3, FZ4, FZ5) of a fleet used in a flight network, wherein
- for each aircraft (FZ1, FZ2, FZ3, FZ4, FZ5) of the fleet:
- technical data,
- items of information on required items of maintenance work (20, 22) on the basis of maintenance intervals and/or error messages comprising deadlines (21, 23) for the completion of the individual items of maintenance work (20, 22), and
- items of information on the provided routing of the aircraft (FZ1, FZ2, FZ3, FZ4, FZ5) in the flight network in a first period of time (T1) comprising the ground times of the aircraft (FZ1, FZ2, FZ3, FZ4, FZ5);
- for the fleet:
- a flight plan for a second period of time (T2) following the first period of time (T1), comprising the flight routes (10) of the flight network to be operated having the technical requirements of the individual flight routes, wherein, for the second period of time (T2), it is not yet specified which aircraft (FZ1, FZ2, FZ3, FZ4, FZ5) is actually to operate the individual flight routes (10) in each case;
- for the flight network:
- the maintenance stations (WS1.1, WS2.1, WS2.2) in the flight network comprising their technical equipment and capacity;
are available, having the following steps:
- determining the required items of maintenance work (20, 22) of at least one aircraft (FZ1, FZ2, FZ3, FZ4, FZ5) comprising the deadlines (21, 23) of the items of maintenance work (20, 22);
- if the deadline (21, 23) of at least one item of maintenance work (20, 22) of an aircraft (FZ1, FZ2, FZ3, FZ4, FZ5) falls in the first period of time:
- specifying a maintenance station (WS1.1, WS2.1, WS2.2) adequately equipped for carrying out the item of maintenance work (20, 22) in the flight network for carrying out the item of maintenance work (20, 22) in a specific ground time of the aircraft (FZ1, FZ2, FZ3, FZ4, FZ5);
- if the deadline (21, 23) of an item of maintenance work (20, 22) of an aircraft (FZ1, FZ2, FZ3, FZ4, FZ5) falls in the second period of time (T2):
- specifying at least one time span required for carrying out the item(s) of maintenance work (20, 22) on an aircraft (FZ1, FZ2, FZ3, FZ4, FZ5) within the second period of time (T2), and
- specifying the routing of all aircraft (FZ1, FZ2, FZ3, FZ4, FZ5) in the flight network in consideration of the technical data of the aircraft (FZ1, FZ2, FZ3, FZ4, FZ5) and the technical requirements of the individual flight routes (10), wherein the routing for the aircraft (FZ1, FZ2, FZ3, FZ4, FZ5) to be maintained has a ground time corresponding to the at least one specified time span at a maintenance station (WS1.1, WS2.1, WS2.2) adequately equipped for carrying out the item of maintenance work (20, 22); and
- carrying out the items of maintenance work (20, 22) on an aircraft (FZ1, FZ2, FZ3, FZ4, FZ5) at the specified maintenance station (WS1.1, WS2.1, WS2.2) in the provided ground time.

2. Method according to Claim 1,
wherein,
if the deadline (21, 23) of an item of maintenance work (20, 22) of an aircraft (FZ1, FZ2, FZ3, FZ4, FZ5) falls in the second period of time (T2), it is checked whether, as the flight plan progresses out of the first period of time (T1), it is possible to carry out the item of maintenance work (20, 22) at an adequately equipped maintenance station (WS1.1, WS2.1, WS2.2) at a planned ground time and, if so, the routing of all aircraft (FZ1, FZ2, FZ3, FZ4, FZ5) in the flight network is updated for the second period of time (T2) until the deadline (23, 21) of the item of maintenance work (20, 22) from the first period of time (T1) so that the otherwise required computing power for creating an alternative routing is omitted.

3. Method according to one of the preceding claims,
wherein
the items of information on required items of maintenance work (20, 22) comprise specifications on which items of maintenance work (20, 22) may technically be executed in parallel.

4. Method according to one of the preceding claims, wherein
the specification of a maintenance station (WS1.1, WS2.1, WS2.2) adequately equipped for carrying out the item of maintenance work (20, 22) in the first period of time (T1) selects that maintenance station, the capacities of which are sufficient for the items of maintenance work (20, 22) in question.

5. Method according to one of the preceding claims, wherein
if there is not sufficient capacity of a maintenance station (WS1.1, WS2.1, WS2.2) within the first period of time (T1) for specifying carrying out an item of maintenance work (20, 22) on an aircraft (FZ1, FZ2, FZ3, FZ4, FZ5), a deferrable item of maintenance work (20, 22) on another aircraft (FZ1, FZ2, FZ3, FZ4, FZ5) at the maintenance station (WS1.1, WS2.1, WS2.2) is deferred to provide capacities for the items of maintenance work (20, 22) of the one aircraft (FZ1, FZ2, FZ3, FZ4, FZ5) that are urgently necessary at short notice.

6. Method according to one of the preceding claims, wherein
when specifying carrying out items of maintenance work (20, 22) in the first period of time (T1), carrying out at least one item of maintenance work (20, 22), the deadline (21, 23) of which is in the second period of time (T2), is also specified.

7. Method according to one of the preceding claims, wherein
the technical data of an aircraft (FZ1, FZ2, FZ3, FZ4, FZ5) comprise specifications of the aircraft type, the jet engine options, the payload mass, and/or the passenger capacity, preferably divided into individual booking classes, the range, the cruise speed, and/or take-off and landing requirements.

8. Method according to one of the preceding claims, wherein
for the required items of maintenance work (20, 22), items of information on the components of the aircraft (FZ1, FZ2, FZ3, FZ4, FZ5) affected by the items of maintenance work and/or requirements on which aircraft systems are to be temporarily shut down for the items of maintenance work (20, 22) are available.

9. Method according to one of the preceding claims, wherein
the technical requirements of the individual flight routes (10) comprise take-off and landing parameters of the connected airports and/or the distance between the airports, wherein the take-off and landing parameters preferably comprise the length and/or the permissible surface pressure per landing gear wheel of the take-off and/or landing runways.

10. Method according to one of the preceding claims, wherein
the first period of time (T1) is up to 21 days, preferably 3 to 7 days.

11. Computer program product comprising program parts which, when loaded in a computer, are designed for carrying out the method according to one of the preceding claims.

## Revendications

1. Procédé pour la réalisation de travaux de maintenance (20, 22) sur des aéronefs commerciaux (FZ1, FZ2, FZ3, FZ4, FZ5) d'une flotte exploitée dans un réseau aérien, dans lequel
- pour chaque aéronef (FZ1, FZ2, FZ3, FZ4, FZ5) de la flotte :
- des données techniques,
- des informations relatives aux travaux de maintenance (20, 22) requis sur la base d'intervalles de maintenance et/ou de messages d'erreur comprenant des dates limites (21, 23) pour l'achèvement des différents travaux de maintenance (20, 22), et
- des informations relatives au routage prévu de l'aéronef (FZ1, FZ2, FZ3, FZ4, FZ5) dans le réseau aérien dans une première période de temps (T1), comprenant les temps au sol de l'aéronef (FZ1, FZ2, FZ3, FZ4, FZ5) ;
- pour la flotte :
- un plan de vol pour une deuxième période de temps (T2) consécutive à la première période de temps (T1), comprenant les trajectoires de vol (10) du réseau aérien à opérer avec les exigences techniques des différentes trajectoires de vol, dans lequel, pour la seconde période de temps (T2), il n'a pas encore été défini quel aéronef (FZ1, FZ2, FZ3, FZ4, FZ5) doit effectivement opérer chacune des différentes trajectoires de vol (10) ;
- pour le réseau aérien :
- les stations de maintenance (WS1.1, WS2.1, WS2.2) du réseau aérien, comprenant leur équipement technique et leur capacité ;
sont disponibles, comprenant les étapes suivantes :
- détermination des travaux de maintenance (20, 22) requis d'au moins un aéronef (FZ1, FZ2, FZ3, FZ4, FZ5), comprenant les dates limites (21, 23) des travaux de maintenance (20, 22) ;
- si la date limite (21, 23) d'au moins un travail de maintenance (20, 22) d'un aéronef (FZ1, FZ2, FZ3, FZ4, FZ5) se situe dans la première période de temps :
- définition d'une station de maintenance 20, 22 (WS1.1, WS2.1, WS2.2) suffisamment équipée dans le réseau aérien pour la réalisation du travail de maintenance (20, 22) pendant un temps au sol spécifique de l'aéronef (FZ1, FZ2, FZ3, FZ4, FZ5) ;
- si la date limite (21, 23) d'un travail de maintenance (20, 22) d'un aéronef (FZ1, FZ2, FZ3, FZ4, FZ5) se situe dans la seconde période de temps (T2) :
- définition d'au moins une durée nécessaire à la réalisation du ou des travaux de maintenance (20, 22) sur un aéronef (FZ1, FZ2, FZ3, FZ4, FZ5) au cours de la seconde période de temps (T2), et
définition du routage de l'ensemble des aéronefs (FZ1, FZ2, FZ3, FZ4, FZ5) dans le réseau aérien en tenant compte des données techniques de l'aéronef (FZ1, FZ2, FZ3, FZ4, FZ5) et des exigences techniques des différentes trajectoires de vol (10), le routage pour l'aéronef devant être maintenu (FZ1, FZ2, FZ3, FZ4, FZ5) présentant un temps au sol correspondant à au moins une durée définie au niveau d'une station de maintenance (WS1.1, WS2.1, WS2.2) suffisamment équipée pour la réalisation du travail de maintenance (20, 22) ; et
- réalisation des travaux de maintenance (20, 22) sur un aéronef (FZ1, FZ2, FZ3, FZ4, FZ5) au niveau de la station de maintenance (WS1.1, WS2.1, WS2.2) définie pendant le temps au sol prévu.

2. Procédé selon la revendication 1,
dans lequel,
si la date limite (21, 23) d'un travail de maintenance (20, 22) d'un aéronef (FZ1, FZ2, FZ3, FZ4, FZ5) se situe dans la seconde période de temps (T2), il est vérifié si, lors de la reconduction du plan de vol à partir de la première période de temps (T1), une réalisation du travail de maintenance (20, 22) au niveau d'une station de maintenance suffisamment équipée (WS1.1, WS2.1, WS2.2) est possible pendant un temps au sol planifié, et, si tel est le cas, le routage de l'ensemble des aéronefs (FZ1, FZ2, FZ3, FZ4, FZ5) dans le réseau aérien pour la seconde période de temps (T2) est reconduit à partir de la première période de temps (T1) jusqu'à la date limite (23, 21) du travail de maintenance (20, 22), de sorte qu'une puissance de calcul autrement requise pour l'établissement d'un routage alternatif est supprimée.

3. Procédé selon l'une quelconque des revendications précédentes,
dans lequel
les informations relatives aux travaux de maintenance (20, 22) requis comprennent des indications sur les travaux de maintenance (20, 22) qui peuvent être réalisés techniquement en parallèle.

4. Procédé selon l'une quelconque des revendications précédentes,
dans lequel
lors de la définition d'une station de maintenance (WS1.1, WS2.1, WS2.2) suffisamment équipée pour la réalisation du travail de maintenance (20, 22) dans la première période de temps (T1), la station de maintenance dont les capacités sont suffisantes pour les travaux de maintenance (20, 22) en question est choisie.

5. Procédé selon l'une quelconque des revendications précédentes,
dans lequel
en cas de capacité insuffisante d'une station de maintenance (WS1.1, WS2.1, WS2.2) dans la première période de temps (T1) pour définir la réalisation d'un travail de maintenance (20, 22) sur un aéronef (FZ1, FZ2, FZ3, FZ4, FZ5), un travail de maintenance (20, 22) pouvant être différé sur un autre aéronef (FZ1, FZ2, FZ3, FZ4, FZ5) au niveau de la station de maintenance (WS1.1, WS2.1, WS2.2) est reporté afin de libérer des capacités pour les travaux de maintenance (20, 22) obligatoirement requis à court terme pour le premier aéronef (FZ1, FZ2, FZ3, FZ4, FZ5).

6. Procédé selon l'une quelconque des revendications précédentes,
dans lequel,
lors de la définition de la réalisation de travaux de maintenance (20, 22) dans la première période de temps (T1), la réalisation d'au moins un travail de maintenance (20, 22) dont la date limite (21, 23) se situe dans la seconde période de temps (T2) est également définie.

7. Procédé selon l'une quelconque des revendications précédentes,
dans lequel
les données techniques d'un aéronef (FZ1, FZ2, FZ3, FZ4, FZ5) comprennent des indications relatives au type d'aéronef, aux options de motorisation, à la masse de charge utile et/ou à la capacité de passagers, de préférence subdivisée en classes de réservation individuelles, au rayon d'action, à la vitesse de croisière et/ou aux exigences de décollage et d'atterrissage.

8. Procédé selon l'une quelconque des revendications précédentes,
dans lequel,
pour les travaux de maintenance (20, 22) requis, sont disponibles des informations relatives aux composants de l'aéronef (FZ1, FZ2, FZ3, FZ4, FZ5) concernés par les travaux de maintenance et/ou des exigences concernant les systèmes d'aéronef devant être temporairement mis hors service pour les travaux de maintenance (20, 22).

9. Procédé selon l'une quelconque des revendications précédentes,
dans lequel
les exigences techniques des différentes trajectoires de vol (10) comprennent des paramètres de décollage et d'atterrissage des aéroports reliés et/ou la distance entre les aéroports, les paramètres de décollage et d'atterrissage comprenant de préférence la longueur et/ou la pression au sol admissible par roue de train d'atterrissage des pistes de décollage et/ou d'atterrissage.

10. Procédé selon l'une quelconque des revendications précédentes,
dans lequel
la première période de temps (T1) est d'au plus 21 jours, de préférence de 3 à 7 jours.

11. Produit de programme d'ordinateur comprenant des parties de programme qui, lorsqu'elles sont chargées dans un ordinateur, sont conçues pour mettre en œuvre le procédé selon l'une quelconque des revendications précédentes.
